# EUROPÄISCHE PATENTSCHRIFT

(11) **EP 3 774 141 B1**
(45) Veröffentlichungstag und Bekanntmachung des Hinweises auf die Patenterteilung: **08.05.2024**
(21) Anmeldenummer: 19712131.2
(22) Anmeldetag: 28.02.2019
(51) Int. Cl.: B23B 31/30, B24B 13/005

(54) **HYDRODEHNSPANNWERKZEUG UND DESSEN VERWENDUNG**
HYDRO-EXPANSION CHUCK AND THE USE THEREOF
OUTIL DE SERRAGE HYDRAULIQUE ET SON UTILISATION

(30) Priorität: 09.04.2018 DE 102018108306
(43) Veröffentlichungstag der Anmeldung: 17.02.2021
(73) Patentinhaber: Schaeffler Technologies AG & Co. KG, 91074 Herzogenaurach (DE)
(72) Erfinder: SCHÄPERKÖTTER, Claus, 91058 Erlangen (DE); BECKE, Stefan, 91413 Neustadt/Aisch (DE); MAYER, Michael, 91085 Weisendorf (DE)
(86) Internationale Anmeldenummer: PCT/DE2019/100182
(87) Internationale Veröffentlichungsnummer: WO 2019/196973

(56) Entgegenhaltungen:
- DE-A1- 2 926 293
- DE-A1- 4 317 170
- DE-A1-102013 100 476
- DE-A1-102016 116 164
- DE-B3-102015 118 757

## Beschreibung

Die Erfindung betrifft ein Hydrodehnspannwerkzeug zum Spannen eines Werkstücks mit einer strukturierten Mantelfläche im Bereich dieser Mantelfläche. Ferner betrifft die Erfindung eine Verwendung eines solchen Hydrodehnspannwerkzeugs. Das Einsatzgebiet der Erfindung erstreckt sich vornehmlich auf Spannwerkzeuge für spangebende Bearbeitung von Prototypen bis hin zu Serienbauteilen.

Zum Spannen von Werkstücken, beispielsweise für eine spangebende Fertigungsbearbeitung, sind präzise Spannwerkzeuge notwendig. Je genauer und reproduzierbarer das Spannwerkzeug ein Werkstück aufnehmen kann, umso effektiver und effizienter gestaltet sich die spanende Bearbeitung des Werkstücks. Die erreichbaren Genauigkeiten am Fertigteil resultieren im Wesentlichen aus der Spanngenauigkeit des Spannwerkzeugs, insbesondere aus der Position zwischen dem Werkstück und dem Spannwerkzeug. Ferner hat der Spannvorgang des Werkstücks einen hohen Einfluss auf die Taktzeit bzw. Rüst- und Spannaufwände des Maschinenbedieners. In der spangebenden Serienfertigung besteht ein hohes Potenzial hinsichtlich einer Automatisierung.

Hydrodehnspannwerkzeuge sind aus dem Stand der Technik bekannt. In der Regel sind Hydrodehnspannwerkzeuge aufwändige Löt- und/oder Schweißkonstruktionen, wobei diese lediglich einfache, rotationssymmetrische Halte- bzw. Spannkonturen aufweisen. Die Anpassung eines Hydrodehnspannwerkzeugs, insbesondere eines Hydrodorns am einzuspannenden Werkstück ist nur begrenzt möglich, beispielsweise durch Spannringe, die den Spanndurchmesser vergrößern können.

Aus der DE 197 37 215 A1 geht eine Werkzeugkombination hervor, die im Wesentlichen aus einem Spannwerkzeug für Linsen und einem Abrichtwerkzeug für Polierwerkzeuge besteht, die beide, zu einer Einheit zusammengefügt, an einer einzigen Werkstückspindel befestigt sind. Das Abrichtwerkzeug und der Stützring können fest miteinander verbunden sein. Ferner umfasst die Werkzeugkombination ein Hydrodehnspannfutter.

Die DE 10 2016 116 164 A1 beschreibt eine Werkzeugkomponente für eine spanabhebende Drehbearbeitung, insbesondere eine spannende Werkzeugaufnahme. In der Werkzeugkomponente ist mindestens eine Hohlkammer durch ein additives Sinterfertigungsverfahren hergestellt, die nicht ausgesintertes Sinterpulver enthält. Dies soll im Betrieb der Werkzeugkomponente eine dämpfende Wirkung erzeugen. Bei der Ausbildung der Werkzeugkomponente zum Einsatz in ein Spannfutter kann in einem Schaftabschnitt der Werkzeugkomponente mindestens eine Dehnkammer zur Ausbildung eines Dehnspannfutters ausgebildet sein. Jede Dehnkammern ist als ringförmige Kammer konzentrisch zu einer Rotationsachse der Werkzeugaufnahme angeordnet, wobei mehrere Dehnkammern entlang der Rotationsachse angeordnet sind. Die Werkzeugkomponente kann als ein Hydrodehnspannfutter ausgebildet sein.

Die DE 10 2013 100 476 A1, welche die Basis für den Vorrichtungsanspruch bildet, beschreibt eine Spannbuchse für hydraulische Spannelemente mit einem Spannraum zur Aufnahme eines hydraulischen Mediums. Mindestens eine Raumwandung ist unter Druckbeaufschlagung elastisch verformbar.

Die DE 10 2015 118 757 B3 offenbart eine hydraulische Dehnspanneinrichtung, insbesondere zum Fixieren eines Werkzeugs in einer Werkzeugmaschine. Im Bereich einer zentralen Aufnahme für einen Werkzeugschaft befindet sich eine Dehnbüchse mit einer Druckkammer und einer Wandung zwischen der Druckkammer und der Aufnahme, wobei die Wandung bei Druckerhöhung in der Druckkammer elastisch nach innen verformbar ist. Die Wandung bildet auf ihrer der Druckkammer abgewandten Seite Spannelemente und T-förmige Schlitze zwischen den Spannelementen aus.

Die DE 29 26 293 A1 offenbart ein Spannwerkzeug mit einem Grundkörper und einem Dehnkörper, der mit dem Grundkörper einen abgedichteten Druckraum zur Aufnahme eines Druckmediums bildet.

Die DE 43 17 170 A1 beschreibt ein Dehnspannwerkzeug zum Spannen und Zentrieren von Werkstücken und Werkzeugen mit einem Passdurchmesser und einer Planfläche, wie beispielsweise Zahnrädern. Es wird eine Dehnspannhülse eingesetzt, die Axialspannkammern und Radialspannkammern aufweist.

Die Aufgabe der vorliegenden Erfindung besteht darin, ein Hydrodehnspannwerkzeug weiterzuentwickeln, wobei zum einen eine Fertigungsdauer des Hydrodehnspannwerkzeugs verkürzt werden soll und zum anderen eine am Werkstück orientierte, konturnahe Ausbildung des Hydrodehnspannwerkzeugs erfolgen soll. Weiterhin soll eine Verwendung des Hydrodehnspannwerkzeugs angegeben werden.

Die Aufgabe wird für das Hydrodehnspannwerkzeug mit den Merkmalen des Anspruchs 1 gelöst. Zum Spannen eines Werkstücks mit einer strukturierten Mantelfläche im Bereich dieser Mantelfläche, umfasst des Hydrodehnspannwerkzeug mindestens einen darin integrierten Kanal zur Aufnahme einer Hydraulikflüssigkeit, wobei die Hydraulikflüssigkeit dazu vorgesehen ist, mit einem Druck beaufschlagt zu werden, um das Werkstück im Hydrodehnspannwerkzeug festzuspannen, wobei das Hydrodehnspannwerkzeug durch ein additives Fertigungsverfahren hergestellt und im Wesentlichen ringförmig ausgebildet ist, wobei der mindestens eine Kanal zumindest einen ringförmigen umlaufenden Kanalabschnitt aufweist, der radial zwischen einer Innenumfangsfläche und einer Außenumfangsfläche des Hydrodehnspannwerkzeugs ausgebildet ist, wobei das Hydrodehnspannwerkzeug an der Innenumfangsfläche eine Haltekontur umfassend eine Vielzahl von Expansionsnasen aufweist, wobei von dem mindestens einen Kanal eine Vielzahl von weiteren Kanalabschnitten abzweigen, wobei sich jeweils mindestens ein weiterer Kanalabschnitt in jeweils eine der Expansionsnasen erstreckt.

Unter einem "additiven Fertigungsverfahren" sind Herstellverfahren zu verstehen, bei denen der Werkstoff zur Erzeugung eines Werkstücks schichtweise hinzugefügt wird. Im Gegensatz dazu stehen klassische subtraktive Fertigungsverfahren, beispielsweise Fräsen, Bohren und Drehen, bei denen Material abgetragen wird, um das Werkstück zu erzeugen. Eine genaue Beschreibung der verschiedenen Prozesse und Verfahren, die unter dem Begriff "additive Fertigungsverfahren" zusammengefasst werden, findet sich in der Richtlinie VDI 3404 (Dezember 2009), auf die an dieser Stelle Bezug genommen wird. Mithilfe von additiven Fertigungsverfahren - auch generative Fertigungsverfahren oder 3D-Druck genannt - können sowohl Kunststoffe als auch Metalle formgenau zum Werkstück hergestellt werden. Die additive Fertigung des Hydrodehnspannwerkzeugs ermöglicht eine Minimierung der Produktionszeit sowie die Realisierung geometrisch komplexer Strukturen und Geometrien für das Hydrodehnspannwerkzeug, insbesondere von Fertigungskonturen, die konturnah an der zu spannenden Form eines Werkstücks orientiert sind.

Die erfindungsgemäß vorgesehene Haltekontur umfassend eine Vielzahl von Expansionsnasen, die an der Innenumfangsfläche des Hydrodehnspannwerkzeugs vorgesehen ist, ermöglicht ein Einspannen von Werkstücken, die eine strukturierte Mantelfläche aufweisen, im Bereich dieser Mantelfläche. Die Anordnung und Ausgestaltung der Expansionsnasen kann unmittelbar dem einzuspannenden Werkstück, insbesondere einer Oberflächenstruktur mit sichtbaren Erhebungen und/oder Einbuchtungen, angepasst werden.

So hat sich eine Verwendung des erfindungsgemäßen Hydrodehnspannwerkzeugs zum Einspannen eines Werkstücks in Form eines Zahnrads oder in Form eines Bauteils mit Außengewinde bewährt. Die strukturierte Mantelfläche ist hierbei durch die Zähne des Zahnrads oder durch das Gewinde des Bauteils ausgebildet. Aber auch Bauteile, die im Bereich ihrer einzuspannenden Mantelfläche unrund, polygonal (einen Umkreis aufweisend), oder dergleichen ausgebildet sind, können vorteilhaft mittels des erfindungsgemäßen Hydrodehnspannwerkzeugs eingespannt werden.

Die Hydraulikflüssigkeit, die in den mindestens einen Kanal einbringbar ist, ist ein inkompressibles Fluid und dient zur Übertragung von Energie, insbesondere zum Aufbau von Druck. Bevorzugt ist die Hydraulikflüssigkeit ein Öl.

Vorzugsweise ist das Hydrodehnspannwerkzeug aus einem Federstahl hergestellt. Der Federstahl ist besonders gut dazu geeignet, eine elastische Verformung des Hydrodehnspannwerkzeugs beim Auf- und Abspannen des Werkstücks zu ermöglichen. Gemäß einer bevorzugten Ausführungsform ist das Hydrodehnspannwerkzeug aus einem martensitaushärtenden Werkzeugstahl, insbesondere dem Werkstoff X3NiCoMoTi 18 9 5 (1.2709) ausgebildet. Dieser Werkstoff ist hochfest und weist bei Kalt- und Warmarbeit eine hohe Zugfestigkeit sowie eine hohe Streckgrenze bei einer gleichzeitig guten Zähigkeit auf. Die Arbeitshärte beträgt ca. 55 bis 57 HRC.

Das Hydrodehnspannwerkzeug ist im Wesentlichen ringförmig ausgebildet, wobei der mindestens eine Kanal zumindest einen umlaufenden Kanalabschnitt aufweist, der radial zwischen einer Innen- und Außenumfangsfläche des Hydrodehnspannwerkzeugs ausgebildet ist. Unter dem "umlaufenden Kanalabschnitt" ist zu verstehen, dass der mindestens eine Kanal zumindest teilweise kreisförmig oder elliptisch im inneren des Hydrodehnspannwerkzeugs ausgebildet ist. Somit befindet sich der mindestens eine Kanal vollständig räumlich innerhalb der Außenhaut des Hydrodehnspannwerkzeugs und erstreckt sich zwischen zwei Stirnseiten sowie der Innen- und Außenumfangsfläche.

Das Hydrodehnspannwerkzeug weist an der Innenumfangsfläche eine Haltekontur auf, wobei die Haltekontur bevorzugt zumindest teilweise an das einzuspannende Werkstück angepasst ist. Die Haltekontur dient zum Aufnehmen und Spannen des Werkstücks und ist derart ausgebildet, dass das Werkstück reproduzierbar und präzise eingespannt werden kann. Insbesondere ist die Haltekontur im Wesentlichen korrespondierend zum Werkstück ausgebildet, um das Werkstück im Wesentlichen form- und kraftschlüssig zu halten.

Der mindestens eine Kanal weist eine Vielzahl von, insbesondere im Wesentlichen axial ausgebildeten, weiteren Kanalabschnitten auf, die sich zumindest teilweise in Richtung der Haltekontur in die Expansionsnasen hinein erstrecken. Diese, insbesondere axial ausgebildeten, weiteren Kanalabschnitte sind fluidtechnisch mit dem zumindest einen umlaufenden Kanalabschnitt verbunden und bilden somit zusammen den mindestens einen Kanal. Vorzugsweise können zusätzliche Kanalabschnitte zwischen jedem weiteren Kanalabschnitt und dem zumindest einen umlaufenden Kanalabschnitt ausgebildet sein. Unter dem Begriff "im Wesentlichen axial ausgebildete Kanalabschnitte" ist zu verstehen, dass diese Kanalabschnitte sich zumindest teilweise über eine axiale Länge des Hydrodehnspannwerkzeugs erstrecken. Bevorzugt sind die im Wesentlichen axial ausgebildete Kanalabschnitte parallel zu einer Längsachse des Hydrodehnspannwerkzeugs ausgebildet und insbesondere senkrecht zum zumindest einen umlaufenden Kanalabschnitt.

Erfindungsgemäß umfasst die Haltekontur eine Vielzahl von Expansionsnasen, die dazu vorgesehen sind, beim Spannen des Werkstücks radial nach innen sowie in beiden Umfangsrichtungen aufzuweiten, um das Werkstück festzuspannen. Die Expansionsnasen sind bevorzugt als Verzahnung mit abgerundeten Zahnköpfen, insbesondere halbzylinderförmig ausgebildet, und erstrecken sich vorzugsweise in axialer Richtung. Bevorzugt sind an der Innenumfangsfläche des Hydrodehnspannwerkzeugs umlaufend in Umfangsrichtung abwechselnd eine Expansionsnase und eine Kavität angeordnet, wobei ein einzuspannendes Werkstück zumindest teilweise in den Kavitäten eindringt und von den Expansionsnasen eingespannt wird.

Die Haltekontur weist in Richtung einer Rotationsachse des Hydrodehnspannwerkzeugs gesehen insbesondere einen annähernd wellenförmigen oder sinusförmigen Verlauf auf. Dies ermöglicht eine besonders effektive allseitige Einspannung von Werkstücken, beispielweise in Form von Zahnrädern. Alternativ können auch Haltekonturen vorliegen, bei denen die Expansionsnasen ballonförmig, T-förmig oder L-förmig ausgebildet sind.

Bevorzugt weist das Hydrodehnspannwerkzeug zwei Stirnseiten auf, wobei jede Expansionsnase sich zwischen den beiden Stirnseiten mit einer gleichbleibenden Nasenhöhe erstreckt. Die Nasenhöhe einer Expansionsnase kann aber auch variieren. So kann auch der Verlauf der Nasenhöhe wellenartig gestaltet sein, wobei sich im Bereich eines jeden Wellenmaximums jeweils ein weiterer Kanalabschnitt in die Expansionsnase erstrecken kann.

Erfindungsgemäß ist jeder weitere Kanalabschnitt in Richtung einer Rotationsachse des Hydrodehnspannwerkzeugs gesehen annähernd T-förmig ausgebildet. Erfindungsgemäß ist jeder weitere Kanalabschnitt im Schnittbild in einer Längsrichtung des umlaufenden Kanalabschnitts gesehen T-förmig ausgebildet. Diese Ausführungsformen ermöglichen eine hohe Ausdehnung in einem Bereich der Expansionsnase, der bei deren Expansion an einem Werkstück angrenzt.

Der Kanal und die Kanalabschnitte sind bei Benutzung des Hydrodehnspannwerkzeugs mit einer Hydraulikflüssigkeit befüllt, wobei ein Hydraulikzylinder mit dem mindestens einen Kanal fluidtechnisch verbunden ist und dazu vorgesehen ist, einen Druck auf die Hydraulikflüssigkeit einzuleiten. Der Hydraulikzylinder weist in einer Ausführungsform zumindest teilweise an einer Außenumfangsfläche ein Gewinde auf, das in einem Gewinde des Hydrodehnspannwerkzeugs eingreift, wobei durch Rotation des Hydraulikzylinders eine axiale Verschiebung des Hydraulikzylinders erfolgt und dadurch die Hydraulikflüssigkeit mit einem Druck beaufschlagt wird. Durch diesen Druck wird die Haltekontur zumindest teilweise elastisch verformt und somit das Werkstück eingespannt.

Bevorzugt ist ein Entlüftungszylinder mit dem mindestens einen Kanal fluidtechnisch verbunden und dazu vorgesehen, den mindestens einen Kanal zu entlüften. Eine Entlüftung des mindestens einen Kanals ist vorteilhaft, um unnötige Stillstandzeiten durch Wartungen oder Wechsel von Hydraulikflüssigkeit zu verhindern.

Gemäß einer bevorzugten Ausführungsform sind eine Vielzahl von Aufnahmeelementen zumindest teilweise beweglich an der Haltekontur angeordnet und dazu vorgesehen, beim Spannen des Werkstücks zumindest teilweise gegen das Werkstück verlagert zu werden.

Weitere die Erfindung verbessernde Maßnahmen werden nachstehend gemeinsam mit der Beschreibung drei bevorzugter Ausführungsbeispiele der Erfindung anhand der Figuren näher dargestellt. Dabei zeigt
- Figur 1a: eine perspektivische Darstellung zur Veranschaulichung des Aufbaus eines erfindungsgemäßen Hydrodehnspannwerkzeugs gemäß einer ersten Ausführungsform,
- Figur 1b: eine perspektivische Schnittdarstellung des Hydrodehnspannwerkzeugs nach Figur 1a,
- Figur 1c: eine weitere perspektivische Schnittdarstellung des Hydrodehnspannwerkzeugs nach Figur 1a,
- Figur 2a: eine perspektivische teilweise durchsichtige Darstellung zur Veranschaulichung des Aufbaus eines erfindungsgemäßen Hydrodehnspannwerkzeugs gemäß einer zweiten Ausführungsform,
- Figur 2b: eine perspektivische teilweise durchsichtige Schnittdarstellung des Hydrodehnspannwerkzeugs nach Figur 2a,
- Figur 3a: eine perspektivische teilweise durchsichtige Darstellung zur Veranschaulichung des Aufbaus eines erfindungsgemäßen Hydrodehnspannwerkzeugs gemäß einer dritten Ausführungsform, und
- Figur 3b: eine perspektivische teilweise durchsichtige Schnittdarstellung des Hydrodehnspannwerkzeugs nach Figur 3a.

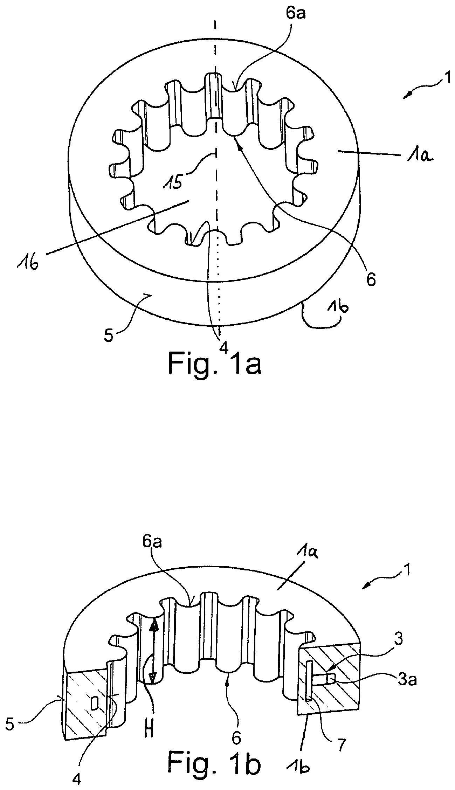

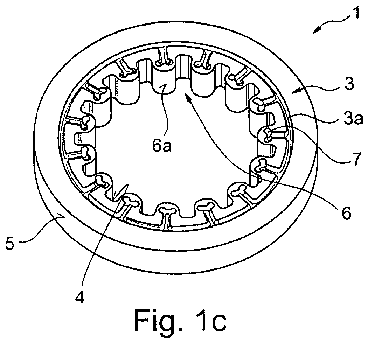

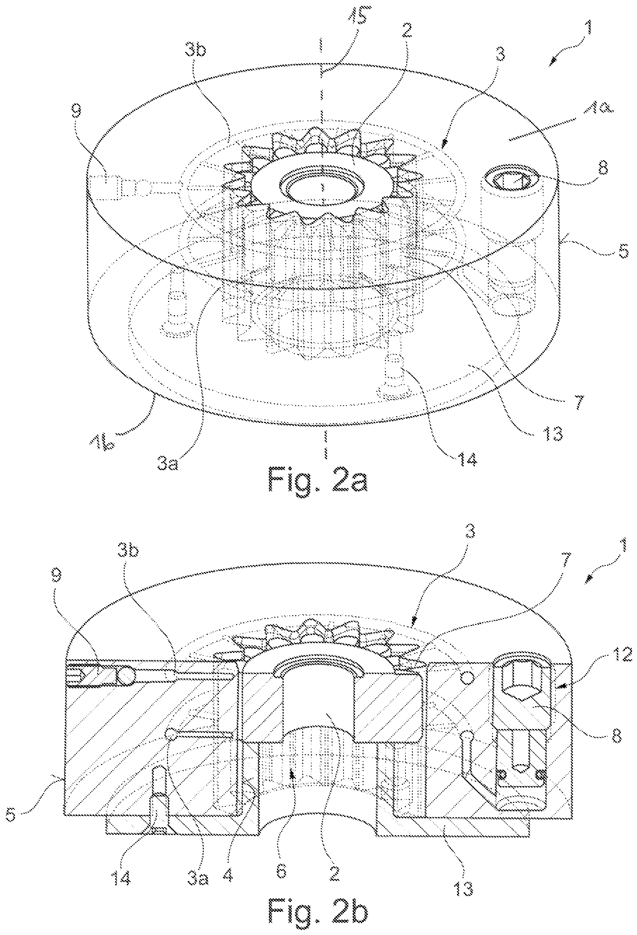

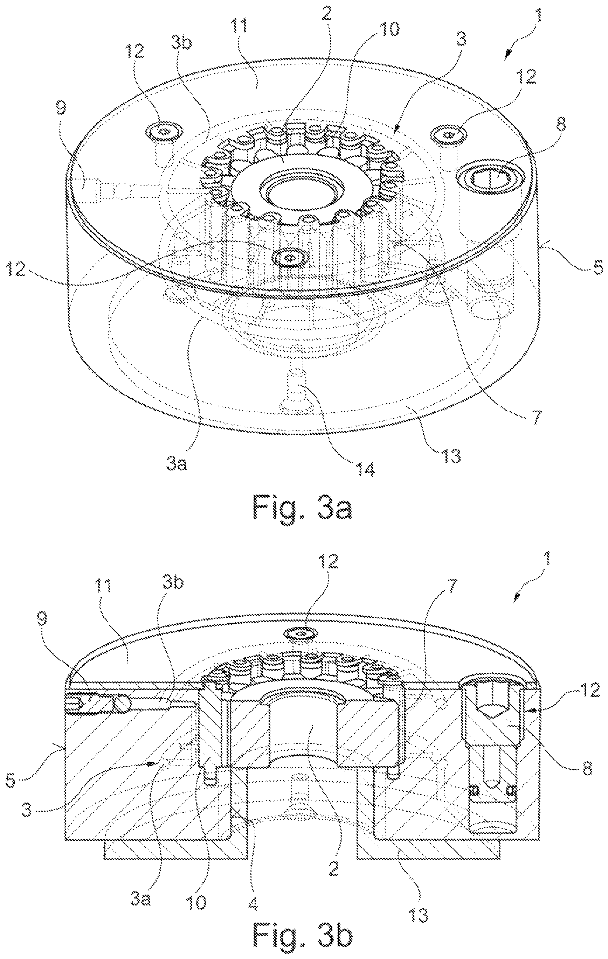

Die Figuren 1a, 1b und 1c zeigen eine erste Ausführungsform des erfindungsgemäßen Hydrodehnspannwerkzeugs 1. Die Figuren 2a und 2b zeigen eine zweite Ausführungsform des erfindungsgemäßen Hydrodehnspannwerkzeugs 1. Ferner zeigen die Figuren 3a und 3b eine dritte Ausführungsform des erfindungsgemäßen Hydrodehnspannwerkzeugs 1.

Gemäß den Figuren 1a, 1b und 1c weist das Hydrodehnspannwerkzeug 1 zum Spannen eines - in diesen Figuren nicht dargestellten - Werkstücks einen darin integrierten Kanal 3 mit einer - hier nicht dargestellten - Hydraulikflüssigkeit auf. Die Hydraulikflüssigkeit ist dazu vorgesehen, mit einem Druck beaufschlagt zu werden, um das Werkstück in einer Werkstückaufnahmeöffnung 16 im Hydrodehnspannwerkzeug 1 festzuspannen. Das Hydrodehnspannwerkzeug weist eine Rotationsachse 15 auf, um welche es rotiert wird. Weiterhin weist das Hydrodehnspannwerkzeug 1 zwei Stirnseiten 1a, 1b, eine Innenumfangsfläche 4 und eine Außenumfangsfläche 5 auf. Das Hydrodehnspannwerkzeug 1 ist durch ein additives Fertigungsverfahren hergestellt. Vorliegend ist das Hydrodehnspannwerkzeug 1 aus einem martensitaushärtenden Werkzeugstahl ausgebildet. Ferner ist das Hydrodehnspannwerkzeug 1 im Wesentlichen ringförmig ausgebildet. An einer Innenumfangsfläche 4 des Hydrodehnspannwerkzeugs 1 ist eine Haltekontur 6 ausgebildet.

Der Kanal 3, der sich im Inneren des Hydrodehnspannwerkzeugs 1 befindet und in den Figuren 1b und 1c abgebildet ist, weist einen umlaufenden, im Wesentlichen kreisrunden Kanalabschnitt 3a auf, der radial zwischen der Innenumfangsfläche 4 und einer Außenumfangsfläche 5 des Hydrodehnspannwerkzeugs 1 ausgebildet ist. Der Kanal 3 weist ferner eine Vielzahl weiteren Kanalabschnitten 7 auf, die sich in Richtung der Haltekontur 6 erstrecken. Vorliegend weist die Haltekontur 6 eine Vielzahl von Expansionsnasen 6a auf, die dazu vorgesehen sind, beim Spannen des Werkstücks radial nach innen sowie in beiden Umfangsrichtungen aufzuweiten, um das Werkstück festzuspannen. Dazu sind die weiteren Kanalabschnitte 7 zum einen annähernd T-förmig ausgebildet und erstrecken sich ferner über einen Großteil der axialen Länge der Expansionsnasen 6a. Die Expansionsnasen 6a erstrecken sich zwischen den beiden Stirnseiten 1a, 1b und weisen eine gleichbleibende Nasenhöhe H auf (vergleiche Figur 1b).

Gemäß den Figuren 2a und 2b weist das Hydrodehnspannwerkzeug 1 zum Spannen eines Werkstücks 2, das vorliegend ein Zahnrad ist, einen darin integrierten Kanal 3 enthaltend eine - hier nicht dargestellte - Hydraulikflüssigkeit auf. Die Hydraulikflüssigkeit ist dazu vorgesehen, mit einem Druck beaufschlagt zu werden, um das Werkstück 2 in einer Werkstückaufnahmeöffnung 16 (vergleiche Figur 1a) im Hydrodehnspannwerkzeug 1 festzuspannen. Gleiche Bezugszeichen wie in den Figuren 1a bis 1c kennzeichnen gleiche Elemente. Vorliegend ist ein Hydraulikzylinder 8 mit dem Kanal 3 fluidtechnisch verbunden und dazu vorgesehen, einen Druck auf die Hydraulikflüssigkeit einzuleiten. Ferner ist ein Entlüftungszylinder 9 mit dem Kanal 3 fluidtechnisch verbunden und dazu vorgesehen, den Kanal 3 zu entlüften. Des Weiteren ist an einer Stirnseite 1b des Hydrodehnspannwerkzeug 1 ein Flanschbauteil 13 zur axialen Positionierung des Werkstücks 2 im Hydrodehnspannwerkzeug 1 angeordnet und durch Schraubelemente 14 fixiert.

Das Hydrodehnspannwerkzeug 1 gemäß der zweiten Ausführungsform ist wie das Hydrodehnspannwerkzeug 1 gemäß der ersten Ausführungsform durch ein additives Fertigungsverfahren hergestellt und aus einem martensitaushärtenden Werkzeugstahl im Wesentlichen ringförmig ausgebildet. An einer Innenumfangsfläche 4 des Hydrodehnspannwerkzeugs 1 ist eine Haltekontur 6 ausgebildet, die korrespondierend zu der Verzahnungsgeometrie des Werkstücks 2 ausgeformt ist. Die Haltekontur 6 gemäß dem zweiten Ausführungsbeispiel entspricht im Wesentlichen der Haltekontur 6 gemäß dem ersten Ausführungsbeispiel.

Der Kanal 3, der sich im inneren des Hydrodehnspannwerkzeugs 1 befindet und in den Figuren 2a und 2b dargestellt ist, weist einen ersten und zweiten im Wesentlichen kreisrund umlaufenden Kanalabschnitt 3a, 3b auf, wobei die beiden umlaufenden Kanalabschnitte 3a, 3b axial voneinander beabstandet sind und über weitere Kanalabschnitte 7 fluidtechnisch miteinander verbunden sind. Die weiteren Kanalabschnitte 7 sind in Richtung der Haltekontur 6 an der Innenumfangsfläche 4 geführt. Durch das Einschrauben des Hydraulikzylinders 8 in die dafür vorgesehene Bohrung 12 am Hydrodehnspannwerkzeug 1 wird die Hydraulikflüssigkeit aus dem ersten umlaufenden Kanalabschnitt 3a in die weiteren Kanalabschnitte 7 gedrängt, wobei hier eine Ausdehnung der Haltekontur 6 erfolgt, sodass das Werkstück 2 form- und kraftschlüssig gehalten wird.

Die dritte Ausführungsform des Hydrodehnspannwerkzeugs 1 gemäß den Figuren 3a und 3b entspricht im Wesentlichen der zweiten Ausführungsform des Hydrodehnspannwerkzeugs 1 gemäß den Figuren 2a und 2b. Die dritte Ausführungsform des Hydrodehnspannwerkzeugs 1 unterscheidet sich von der zweiten Ausführungsform des Hydrodehnspannwerkzeugs 1 lediglich darin, dass eine Vielzahl von zylinderförmig ausgebildeten Aufnahmeelementen 10 teilweise beweglich an der Haltekontur 6 angeordnet sind und dazu vorgesehen sind, beim Spannen des Werkstücks 2 teilweise gegen das Werkstück 2 verlagert zu werden. Eine Ringscheibe 11 ist zur axialen Aufnahme und teilweise beweglichen Lagerung der Aufnahmeelemente 10 axial an einer Stirnseite des Hydrodehnspannwerkzeugs 1 angeordnet und mittels drei Schraubelementen 12 gesichert.

### Bezugszeichenliste

- 1: Hydrodehnspannwerkzeug
- 1a, 1b: Stirnseite
- 2: Werkstück
- 3: Kanal
- 3a, 3b: umlaufender Kanalabschnitt
- 4: Innenumfangsfläche
- 5: Außenumfangsfläche
- 6: Haltekontur
- 7: weiterer Kanalabschnitt
- 8: Hydraulikzylinder
- 9: Entlüftungszylinder
- 10: Aufnahmeelement
- 11: Ringscheibe
- 12: Schraubelement
- 13: Flanschbauteil
- 14: Schraubelement
- 15: Rotationsachse
- 16: Werkstückaufnahmeöffnung
- H: Nasenhöhe

## Patentansprüche

1. Hydrodehnspannwerkzeug (1) zum Spannen eines Werkstücks (2) mit einer strukturierten Mantelfläche im Bereich dieser Mantelfläche, umfassend mindestens einen darin integrierten Kanal (3) zur Aufnahme einer Hydraulikflüssigkeit, wobei die Hydraulikflüssigkeit dazu vorgesehen ist, mit einem Druck beaufschlagt zu werden, um das Werkstück (2) im Hydrodehnspannwerkzeug (1) festzuspannen, wobei das Hydrodehnspannwerkzeug (1) durch ein additives Fertigungsverfahren hergestellt und im Wesentlichen ringförmig ausgebildet ist, wobei der mindestens eine Kanal (3) zumindest einen ringförmigen umlaufenden Kanalabschnitt (3a, 3b) aufweist, der radial zwischen einer Innenumfangsfläche (4) und einer Außenumfangsfläche (5) des Hydrodehnspannwerkzeugs (1) ausgebildet ist, wobei das Hydrodehnspannwerkzeug (1) an der Innenumfangsfläche (4) eine Haltekontur (6) umfassend eine Vielzahl von Expansionsnasen (6a) aufweist, und dass von dem mindestens einen Kanal (3) eine Vielzahl von weiteren Kanalabschnitten (7) abzweigen, wobei sich jeweils mindestens ein weiterer Kanalabschnitt (7) in jeweils eine der Expansionsnasen (6a) erstreckt, wobei jeder weitere Kanalabschnitt (7) in Richtung einer Rotationsachse (15) des Hydrodehnspannwerkzeugs (1) gesehen annähernd T-förmig ausgebildet ist und wobei jeder weitere Kanalabschnitt (7) im Schnittbild in einer Längsrichtung des umlaufenden Kanalabschnitts (3a, 3b) gesehen T-förmig ausgebildet ist.

2. Hydrodehnspannwerkzeug (1) nach Anspruch 1,
**dadurch gekennzeichnet, dass** das Hydrodehnspannwerkzeug (1) aus einem Federstahl hergestellt ist.

3. Hydrodehnspannwerkzeug (1) nach einem der vorhergehenden Ansprüche, **dadurch gekennzeichnet, dass** die Haltekontur (6) in Richtung einer Rotationsachse (15) des Hydrodehnspannwerkzeugs (1) gesehen einen annähernd wellenförmigen oder sinusförmigen Verlauf aufweist.

4. Hydrodehnspannwerkzeug (1) nach einem der Ansprüche 1 bis 3,
**dadurch gekennzeichnet, dass** das Hydrodehnspannwerkzeug (1) zwei Stirnseiten (1a, 1b) aufweist, wobei jede Expansionsnase (6a) sich zwischen den beiden Stirnseiten (1a, 1b) mit einer gleichbleibenden Nasenhöhe (H) erstreckt.

5. Hydrodehnspannwerkzeug (1) nach einem der vorhergehenden Ansprüche, **dadurch gekennzeichnet, dass** der Kanal (3) und die Kanalabschnitte (3a, 3b, 7) mit einer Hydraulikflüssigkeit befüllt sind, dass ein Hydraulikzylinder (8) mit dem mindestens einen Kanal (3) fluidtechnisch verbunden ist und dazu vorgesehen ist, einen Druck auf die Hydraulikflüssigkeit einzuleiten.

6. Hydrodehnspannwerkzeug (1) nach einem der vorhergehenden Ansprüche, **dadurch gekennzeichnet, dass** ein Entlüftungszylinder (9) mit dem mindestens einen Kanal (3) fluidtechnisch verbunden ist und dazu vorgesehen ist, den mindestens einen Kanal (3) zu entlüften.

7. Hydrodehnspannwerkzeug (1) nach einem der vorhergehenden Ansprüche, **dadurch gekennzeichnet, dass** eine Vielzahl von Aufnahmeelementen (10) zumindest teilweise beweglich an der Haltekontur (6) angeordnet sind und dazu vorgesehen sind, beim Spannen des Werkstücks (2) zumindest teilweise gegen das Werkstück (2) verlagert zu werden.

8. Verwendung eines Hydrodehnspannwerkzeugs (1) nach einem der Ansprüche 1 bis 7 zum Einspannen eines Werkstücks (2) in Form eines Zahnrads oder in Form eines Bauteils mit Außengewinde.

## Claims

1. A hydro-expansion chuck (1) for clamping a workpiece (2) having a structured lateral surface in the region of this lateral surface, comprising at least one channel (3) integrated therein for receiving a hydraulic fluid, wherein the hydraulic fluid is provided to be pressurised in order to clamp the workpiece (2) securely in the hydro-expansion chuck (1), wherein the hydro-expansion chuck (1) is produced by an additive manufacturing method and is designed to be substantially annular, wherein the at least one channel (3) has at least one annular circumferential channel portion (3a, 3b) which is formed radially between an inner circumferential surface (4) and an outer circumferential surface (5) of the hydro-expansion chuck (1), wherein the hydro-expansion chuck (1) on the inner circumferential surface (4) has a holding contour (6) comprising a plurality of expansion lugs (6a), and in that a plurality of further channel portions (7) branch off from the at least one channel (3), wherein at least one further channel portion (7) in each case extends into one of the expansion lugs (6a), wherein each further channel portion (7), viewed in the direction of a rotation axis (15) of the hydro-expansion chuck (1), is approximately T-shaped, and wherein each further channel portion (7), in section, is T-shaped as viewed in a longitudinal direction of the circumferential channel portion (3a, 3b).

2. The hydro-expansion chuck (1) according to claim 1,
**characterised in that** the hydro-expansion chuck (1) is made of a spring steel.

3. The hydro-expansion chuck (1) according to one of the preceding claims, **characterised in that** the holding contour (6), viewed in the direction of a rotation axis (15) of the hydro-expansion chuck (1), has an approximately undulating or sinusoidal profile.

4. The hydro-expansion chuck (1) according to one of claims 1 to 3,
**characterised in that** the hydro-expansion chuck (1) has two end faces (1a, 1b), wherein each expansion lug (6a) extends between the two end faces (1a, 1b) with a constant lug height (H).

5. The hydro-expansion chuck (1) according to one of the preceding claims, **characterised in that** the channel (3) and the channel portions (3a, 3b, 7) are filled with a hydraulic fluid, and **in that** a hydraulic cylinder (8) is fluidically connected to the at least one channel (3) and is intended to pressurise the hydraulic fluid.

6. The hydro-expansion chuck (1) according to one of the preceding claims, **characterised in that** a venting cylinder (9) is fluidically connected to the at least one channel (3) and is provided for venting the at least one channel (3).

7. The hydro-expansion chuck (1) according to one of the preceding claims, **characterised in that** a plurality of receiving elements (10) are arranged at least partially movably on the holding contour (6) and are intended to be displaced at least partially towards the workpiece (2) when the workpiece (2) is clamped.

8. Use of a hydro-expansion chuck (1) according to one of claims 1 to 7 for clamping a workpiece (2) in the form of a gearwheel or in the form of a component having an external thread.

## Revendications

1. Outil de serrage hydraulique (1) pour le serrage d'une pièce à usiner (2) comportant une surface d'enveloppe structurée dans la zone de cette surface d'enveloppe, comprenant au moins un canal (3) intégré dans celle-ci pour la réception d'un fluide hydraulique, dans lequel le fluide hydraulique est prévu pour être sollicité par une pression, afin de serrer fixement la pièce à usiner (2) dans l'outil de serrage hydraulique (1), dans lequel l'outil de serrage hydraulique (1) est fabriqué par un procédé de fabrication additive et est conçu essentiellement de forme annulaire, dans lequel l'au moins un canal (3) présente au moins une section de canal (3a, 3b) circonférentielle de forme annulaire, qui est conçue radialement entre une surface circonférentielle interne (4) et une surface circonférentielle externe (5) de l'outil de serrage hydraulique (1), dans lequel l'outil de serrage hydraulique (1) présente sur la surface circonférentielle interne (4) un contour de maintien (6) comprenant une pluralité d'ergots d'expansion (6a) et une pluralité d'autres sections de canal (7) se ramifient à partir de l'au moins un canal (3), dans lequel respectivement au moins une autre section de canal (7) s'étend dans respectivement un des ergots d'expansion (6a), dans lequel chaque autre section de canal (7) est conçue approximativement en forme de T vue dans la direction d'un axe de rotation (15) de l'outil de serrage hydraulique (1) et dans lequel chaque autre section de canal (7) est conçue en forme de T vue dans une vue en coupe dans une direction longitudinale de la section de canal (3a, 3b) circonférentielle.

2. Outil de serrage hydraulique (1) selon la revendication 1,
**caractérisé en ce que** l'outil de serrage hydraulique (1) est fabriqué à partir d'un acier à ressort.

3. Outil de serrage hydraulique (1) selon l'une quelconque des revendications précédentes, **caractérisé en ce que** le contour de maintien (6) présente un tracé approximativement ondulé ou sinusoïdal vu dans la direction d'un axe de rotation (15) de l'outil de serrage hydraulique (1).

4. Outil de serrage hydraulique (1) selon l'une quelconque des revendications 1 à 3, **caractérisé en ce que** l'outil de serrage hydraulique (1) présente deux faces frontales (1a, 1b), dans lequel chaque ergot d'expansion (6a) s'étend entre les deux faces frontales (1a, 1b) avec une hauteur d'ergot (H) constante.

5. Outil de serrage hydraulique (1) selon l'une quelconque des revendications précédentes, **caractérisé en ce que** le canal (3) et les sections de canal (3a, 3b, 7) sont remplis avec un fluide hydraulique, **en ce qu'**un cylindre hydraulique (8) est relié fluidiquement à l'au moins un canal (3) et est prévu pour appliquer une pression sur le fluide hydraulique.

6. Outil de serrage hydraulique (1) selon l'une quelconque des revendications précédentes, **caractérisé en ce qu'**un cylindre de purge (9) est relié fluidiquement à l'au moins un canal (3) et est prévu pour purger l'au moins un canal (3).

7. Outil de serrage hydraulique (1) selon l'une quelconque des revendications précédentes, **caractérisé en ce qu'**une pluralité d'éléments de réception (10) sont agencés au moins partiellement mobiles sur le contour de maintien (6) et sont prévus pour être déplacés au moins partiellement contre la pièce à usiner (2) lors du serrage de la pièce à usiner (2).

8. Utilisation d'un outil de serrage hydraulique (1) selon l'une quelconque des revendications 1 à 7 pour le serrage d'une pièce à usiner (2) sous la forme d'une roue dentée ou sous la forme d'un composant comportant un filetage externe.
